# FASCICULE DE BREVET EUROPEEN

(11) **EP 2 305 001 B1**
(45) Date de publication et mention de la délivrance du brevet: **30.11.2011**
(21) Numéro de dépôt: 09784408.8
(22) Date de dépôt: 16.06.2009
(51) Int. Cl.: H04W 84/18

(54) **PROCEDE DE TRANSMISSION D'UN SIGNAL DE COMMUNICATION**
KOMMUNIKATIONSSIGNAL-ÜBERTRAGUNGSVERFAHREN
COMMUNICATION SIGNAL TRANSMISSION METHOD

(30) Priorité: 23.06.2008 FR 0854137
(43) Date de publication de la demande: 06.04.2011
(73) Titulaire: France Telecom, 75015 Paris (FR)
(72) Inventeur: MISCOPEIN, Benoît, F-38000 Grenoble (FR); SCHWOERER, Jean, F-38000 Grenoble (FR); GORCE, Jean-Marie, F-01600 Massieux (FR)
(74) Mandataire: Benetiere, Marion
(86) Numéro de dépôt international: PCT/FR2009/051145
(87) Numéro de publication internationale: WO 2010/007274

(56) Documents cités:
- FR-A- 2 902 589
- SANGSOON LIM ET AL: "An Ultra Low Power Medium Access Control Protocol with the Divided Preamble Sampling" UBIQUITOUS COMPUTING SYSTEMS LECTURE NOTES IN COMPUTER SCIENCE;;LNCS, SPRINGER, BERLIN, DE, vol. 4239, 1 janvier 2006 (2006-01-01), pages 210-224, XP019045604
- ABDELMALIK BACHIR ET AL: "Preamble MAC Protocols with Non-persistent Receivers in Wireless Sensor Networks" NETWORKING 2008 AD HOC AND SENSOR NETWORKS, WIRELESS NETWORKS, NEXT GENERATION INTERNET; [LECTURE NOTES IN COMPUTER SCIENCE], SPRINGER BERLIN HEIDELBERG, BERLIN, HEIDELBERG, vol. 4982, 5 mai 2008 (2008-05-05), pages 36-47, XP019088857
- LIU BING ET AL: "An Adaptive Schedule Medium Access Control for Wireless Sensor Networks" NETWORKING, 2007. ICN '07. SIXTH INTERNATIONAL CONFERENCE ON, IEEE, PI, 22 avril 2007 (2007-04-22), page 12, XP031214463

## Description

La présente invention se situe dans le domaine de la transmission de signaux de communication dans un réseau de noeuds.

Pour un mode de transmission par contention de type CSMA (pour *Carrier Sense Multiple Access* en anglais), les noeuds doivent écouter en permanence le canal de transmission, soit pour émettre soit dans l'attente d'un message qui leur est destiné.

Un noeud émetteur ayant des données à transmettre à un noeud destinataire ne transmet les données que si le canal est libre. Cette technique permet de limiter les collisions entre les données. En étant en permanence à l'écoute, le noeud destinataire des données peut ainsi détecter les données qui lui sont destinées et les recevoir.

Or, dans cet état d'écoute permanent, les noeuds consomment de l'énergie inutilement.

Pour palier cet inconvénient, certains modes de transmission reposent sur des techniques d'endormissement des noeuds, comme par exemple la technique dite "à échantillonnage de préambule".

Les noeuds dorment pendant une période de temps qui a la même durée pour tous les noeuds, Ils se réveillent au bout de cette période, d'une façon qui peut être non synchronisée.

Pendant qu'il est éveillé, un noeud sonde le canal de transmission pour détecter des données transmises. Si, pendant la durée d'éveil, il ne détecte pas de données qui lui soient destinées, le noeud se rendort. Il ne se réveille à nouveau que lorsqu'une période d'endormissement est écoulée.

Cette technique permet de garantir que le noeud destinataire détecte les données qui lui sont destinées pendant la durée d'éveil.

Pour cela, le noeud émetteur des données fait précéder celles-ci d'un préambule. La durée du préambule est au moins aussi longue que la période d'endormissement. Ainsi, lorsque le noeud destinataire des données se réveille, il entend le préambule.

Sans raffinement particulier de ce mode de transmission, tous les noeuds au voisinage du noeud émetteur des données détectent le préambule et restent éveillés jusqu'à la réception des données. L'analyse du champ contenant l'adresse du destinataire des données permet aux noeuds qui n'en sont pas destinataires de ne pas en tenir compte et de se rendormir.

Dans une version plus évoluée de ce mode de transmission, il est possible d'insérer l'adresse du noeud destinataire dans le préambule. Ainsi, lorsqu'un noeud détecte le préambule, il identifie s'il est destinataire ou non des données. S'il est destinataire des données, il reste alors éveillé jusqu'à la réception de celles-ci et pendant toute la durée de la réception de ces données, sinon il se rendort.

La durée d'éveil d'un noeud est très brève. La durée d'éveil correspond à la durée minimale nécessaire à un noeud pour détecter un préambule. Cette durée d'éveil est très largement inférieure à la période d'endormissement. Par exemple, pour une transmission de type ZigBee (norme IEEE 802.15.4) la durée d'endormissement est de l'ordre de plusieurs centaines de millisecondes pour une durée d'éveil d'environ trente microsecondes.

Pour cette technique, la consommation en énergie est essentiellement concentrée sur les noeuds émetteurs.

La publication de Lim et al, intitulée « An Ultra Low Power Medium Access Control Protocol with the Divided Preamble Sampling », en date de mai 2008, décrit un protocole de transmission radio à échantillonnage de préambule (DPS-MAC) selon lequel un préambule présente une structure en plusieurs segments. Chacun de ces segments comprend plusieurs informations, permettant à un noeud récepteur de savoir s'il est destinataire des données utiles et de calculer, le cas échéant, quand il va les recevoir. Il n'a donc pas besoin d'écouter l'intégralité du préambule et peut se rendormir.

Certains signaux de communication sont soumis à des règles que doivent respecter les noeuds. Ces règles peuvent porter sur le taux d'activité (ratio entre le temps d'émission et le temps de silence sur une période de temps) ou encore sur la durée d'émission d'un noeud.

Par exemple, pour la réglementation européenne relative à l'émission de signaux UWB (pour *Ultra Wide Band* en anglais) dans une certaine bande de fréquence, le taux d'activité est limité à 5% sur une seconde, à 0,5% sur une heure et un noeud ne peut pas émettre en continu pendant une durée supérieure à cinq millisecondes.

La technique d'endormissement des noeuds avec échantillonnage de préambule présente l'inconvénient de ne pas pouvoir s'appliquer à des modes de transmission de ce type car le durée du préambule peut excéder la durée d'émission prévue.

Un des buts de l'invention est de proposer une technique de transmission avec échantillonnage de préambule qui permet de satisfaire des règles de transmission tout en gérant la consommation en énergie des noeuds.

Ainsi, la présente invention concerne, selon un premier aspect, un procédé de transmission d'un signal de communication dans un réseau de communication comprenant une pluralité de noeuds respectant alternativement des périodes d'endormissement et des périodes d'éveil, un noeud émetteur faisant précéder la transmission de données à destination d'un noeud destinataire d'une étape d'émission d'un préambule initial. Le procédé comporte au moins un relais de l'émission du préambule initial, par un noeud voisin du noeud émetteur, un relais correspondant à l'émission d'un préambule formé à partir du préambule émis au cours du relais précédent, le préambule émis lors du premier relais étant formé à partir du préambule initial et ledit au moins un relais étant assuré jusqu'à ce que le noeud destinataire des données détecte le préambule émis.

Le fait de relayer l'émission d'un préambule permet d'émettre des préambules de taille réduite par rapport aux préambules de l'état de l'art.

Ainsi des règles définies pour certains modes de communication peuvent être satisfaites et la consommation en énergie nécessaire à l'émission d'un préambule est répartie sur les noeuds voisins assurant les relais.

Selon une caractéristique préférée, un préambule émis comporte une information correspondant au temps restant avant la transmission des données ou une information correspondant au nombre de relais à effectuer avant la transmission des données.

La formation d'un préambule au cours d'un relais comporte la modification de l'information comprise dans le préambule émis au cours du relais précédent et qui correspond au temps restant avant la transmission des données ou au nombre de relais avant la transmission des données. La formation du premier préambule correspond à la modification de l'information comprise dans le préambule initial.

L'information contenue dans un préambule, modifiée à chaque relais, permet au noeud destinataire, lorsqu'il détecte un préambule, de déterminer à quel moment il va recevoir les données qui lui sont destinées. Il peut alors se rendormir entre la détection du préambule et le moment de réception des données. Ceci permet d'éviter une consommation en énergie inutile de la part du noeud destinataire.

Selon une caractéristique préférée, la durée d'un préambule est inférieure à un seuil prédéterminé.

Le procédé de transmission selon l'invention permet d'utiliser des préambules de taille très réduite permettant ainsi de satisfaire des règles imposées par certains modes de transmission.

Selon une caractéristique préférée, le noeud émetteur transmet les données à l'issue d'un temps d'attente qui débute à la fin de l'émission du préambule initial.

Le temps d'attente permet au noeud destinataire de recevoir un préambule et d'être prêt pour recevoir les données.

Selon une caractéristique préférée, le noeud voisin assurant le relais de l'émission d'un préambule réitère l'émission d'un préambule tant qu'un autre noeud voisin n'a pas pris le relais de l'émission d'un préambule ou tant que le noeud destinataire n'a pas détecté un préambule émis.

La réémission d'un préambule par le noeud voisin tant qu'un autre noeud voisin n'a pas pris le relais ou tant que le noeud destinataire n'a pas détecté le préambule permet de réduire le risque de perdre les données destinées au noeud destinataire.

Selon des caractéristiques préférées, le noeud émetteur assure une veille jusqu'à la détection par le noeud destinataire d'un préambule émis et après avoir détecté un préambule émis, le noeud destinataire émet un accusé de réception comportant une information indiquant qu'il est éveillé et prêt à recevoir les données qui lui sont destinées. Après avoir entendu l'accusé de réception émis pas le noeud destinataire, le noeud émetteur transmet les données sans attendre la fin du temps d'attente.

Ainsi, le noeud émetteur est informé que le noeud destinataire a bien détecté un préambule et que le noeud destinataire est éveillé et prêt à recevoir les données qui lui sont destinées. Le noeud émetteur peut alors transmettre les données destinées au noeud destinataire sans attendre que le temps d'attente soit écoulé.

Selon des caractéristiques préférées, le procédé comporte une gestion de conflit entre au moins deux noeuds voisins lors du relais de l'émission d'un préambule permettant de déterminer un noeud voisin prioritaire pour l'émission d'un préambule. Un noeud voisin prioritaire correspond à un noeud ayant écouté le plus longtemps le préambule émis au cours du relais précédent entre le début de la période d'éveil de ce noeud et la fin de l'émission du préambule.

La gestion de conflit permet d'assurer un fonctionnement optimisé du procédé selon l'invention.

L'invention concerne aussi un noeud dans un réseau de communication comprenant une pluralité de noeuds respectant alternativement des périodes d'endormissement et des périodes d'éveil, un noeud émetteur faisant précéder la transmission de données à destination d'un noeud destinataire d'une étape d'émission d'un préambule initial. Un noeud selon l'invention comporte des moyens aptes à effectuer un relais de l'émission du préambule initial, un relais correspondant à l'émission d'un préambule formé à partir du préambule émis au cours d'un relais précédent, le préambule émis lors du premier relais étant formé à partir du préambule initial et le relais étant assuré jusqu'à ce que le noeud destinataire des données détecte le préambule émis.

Les avantages définis pour le procédé s'appliquent également au noeud tel que défini par l'invention.

L'invention concerne également un réseau de communication comprenant une pluralité de noeuds respectant alternativement des périodes d'endormissement et des périodes d'éveil, un noeud émetteur faisant précéder la transmission de données à destination d'un noeud destinataire d'une étape d'émission d'un préambule initial. Un réseau selon l'invention comporte au moins un noeud apte à effectuer un relais de l'émission du préambule initial, un relais correspondant à l'émission d'un préambule formé à partir du préambule émis au cours d'un relais précédent, le préambule émis lors du premier relais étant formé à partir du préambule initial et le relais étant assuré jusqu'à ce que le noeud destinataire des données détecte le préambule émis.

L'invention concerne aussi un programme d'ordinateur comportant des instructions pour mettre en oeuvre le procédé décrit précédemment lorsque le programme est exécuté par un ordinateur.

D'autres caractéristiques et avantages de l'invention apparaîtront à la lecture de modes de réalisation préférés d'un procédé de transmission d'un signal de communication, décrits en référence aux figures annexées sur lesquelles :
- la figure 1 représente le principe de fonctionnement, selon l'état de l'art, d'un mode de transmission reposant sur une technique d'endormissement des noeuds mettant en oeuvre un protocole à échantillonnage de préambule,
- la figure 2 représente le principe de fonctionnement d'un premier mode de réalisation selon l'invention d'un mode de transmission reposant sur une technique d'endormissement des noeuds avec échantillonnage de préambule,
- la figure 3 représente le principe de fonctionnement d'un deuxième mode de réalisation selon l'invention d'un mode de transmission reposant sur une technique d'endormissement des noeuds avec échantillonnage de préambule,
- la figure 4 représente le principe de fonctionnement d'un troisième mode de réalisation selon l'invention d'un mode de transmission reposant sur une technique d'endormissement des noeuds avec échantillonnage de préambule,
- la figure 5 représente une gestion de conflit entre deux noeuds voisins aptes à émettre un préambule,
- la figure 6 représente un schéma fonctionnel d'un noeud.

La description qui suit de l'état de l'art et de l'invention est définie pour un réseau de communication comportant une pluralité de noeuds. Les signaux de communication transmis d'un noeud émetteur à un noeud destinataire, via des noeuds voisins, peuvent correspondre à un préambule ou à des données. Le mode de transmission utilisé repose sur une technique d'endormissement des noeuds avec échantillonnage de préambule.

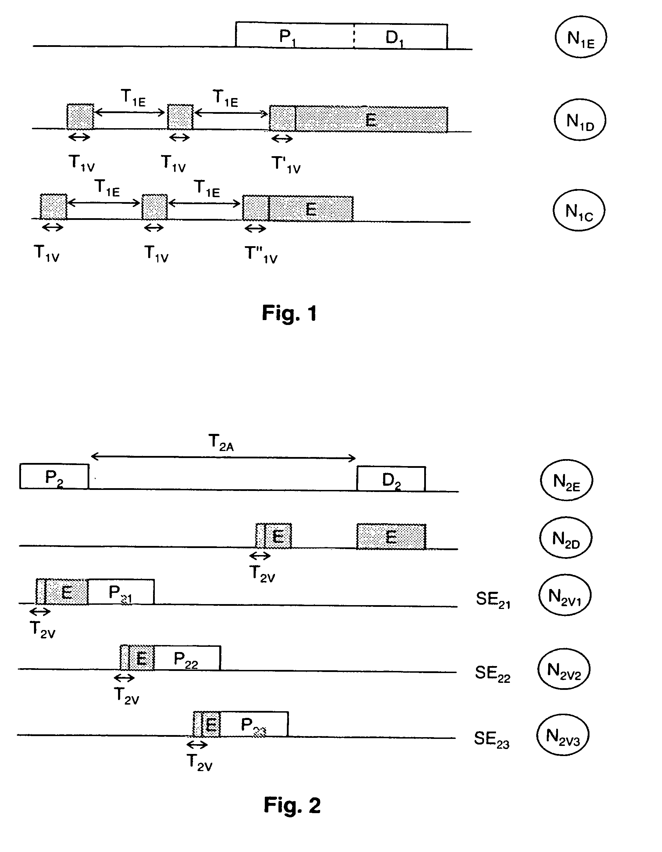

La **figure 1** représente le principe de fonctionnement, selon l'état de l'art, d'un mode de transmission d'un signal de communication reposant sur une technique d'endormissement des noeuds avec échantillonnage de préambule.

Un noeud émetteur N_{1E} transmet des données D₁ à un noeud destinataire N_{1D}. Cette étape de transmission est précédée par une étape d'émission d'un préambule P₁.

On considère un mode de transmission pour lequel le préambule P₁ comporte, entre autres, l'identification du noeud destinataire N_{1D}.

Compte tenu du mode de transmission utilisé, le noeud destinataire N_{1D} est endormi pendant des périodes d'endormissent T_{1E}. Le noeud destinataire N_{1D} se réveille périodiquement pendant de courts instants T_{1V}. Si au cours d'une période d'éveil, par exemple la période T'_{1V} représentée sur la figure 1, le noeud destinataire N_{1D} détecte un préambule P₁ l'identifiant comme noeud destinataire des données D₁, alors il reste en état d'éveil E jusqu'à la réception des données D₁ et pendant la durée de cette réception.

Le noeud N_{1C}, comme le noeud destinataire N_{1D}, est endormi pendant des périodes d'endormissent T_{1E} et éveillé pendant de courts instants T_{1V}. Si au cours d'une période d'éveil, par exemple la période T"_{1V} représentée sur la figure 1, le noeud N_{1c} détecte le préambule P₁ qui ne l'identifie pas comme noeud destinataire des données D₁, alors il reste en état d'éveil E jusqu'à la fin de l'émission du préambule P₁ puis se rendort.

Comme illustré à la figure 1, la durée d'émission d'un préambule P₁ par un noeud émetteur N_{1E} est plus longue que la période d'endormissement T_{1E} d'un noeud destinataire N_{1D}. Ce mode de fonctionnement permet de s'assurer que le noeud destinataire N_{1D} reçoit effectivement les données qui lui sont destinées. Mais, ceci a pour conséquence de faire supporter au noeud émetteur N_{1E} une consommation en énergie importante pour l'émission du préambule P₁.

La **figure 2** représente le principe de fonctionnement d'un premier mode de réalisation selon l'invention d'un mode de transmission reposant sur une technique d'endormissement des noeuds avec échantillonnage de préambule.

Un noeud émetteur N_{2E} transmet des données D₂ à un noeud destinataire N_{2D}. Cette étape de transmission est précédée par une étape d'émission d'un préambule initial P₂ comportant, entre autres, l'identification du noeud destinataire N_{2D}.

Le préambule P₂ peut également comporter, entre autres :
- l'adresse du noeud destinataire N_{2D},
- le temps restant avant la transmission des données D₂,
- l'adresse du noeud émetteur N_{2E}.

Ces informations peuvent être situées en fin de préambule ou être répétées tout au long de l'émission préambule.

La durée du préambule initial P₂ est très inférieure à la durée du préambule de l'état de l'art P₁ et par conséquent très inférieure à la période d'endormissement d'un noeud. A titre d'exemple, alors que la durée du préambule P₁ est d'au moins plusieurs centaines de millisecondes, la durée du préambule initial P₂ est de l'ordre de quelques millisecondes. Par exemple, la durée du préambule initial P₂ est inférieure à cinq millisecondes pour satisfaire les règles définies par la réglementation des systèmes UWB appliquée dans certains pays.

Selon l'invention, l'étape d'émission du préambule initial P₂ est réalisée au cours d'au moins une sous-étape pendant laquelle l'émission du préambule initial P₂ est relayée au moins une fois par un noeud voisin du noeud émetteur N_{2E}.

L'information comprise dans le préambule initial P₂ concernant le temps restant avant la transmission des données D₂ peut alors être remplacée par le nombre de relais à effectuer avant la transmission des données D₂.

A titre d'exemples non limitatifs de l'invention, la figure 2 fait apparaître trois sous-étapes SE₂₁, SE₂₂ et SE₂₃, réalisées respectivement par les noeuds voisins N_{2V1}, N_{2V2}, et N_{2V3} du noeud émetteur N_{2E}.

Au cours d'une sous-étape SE₂₁, le noeud voisin N_{2V1}, éveillé pendant un instant T_{2V} alors que le préambule initial P₂ est émis par le noeud émetteur N_{2E}, détecte le préambule P₂. Le noeud voisin N_{2V1} reste en état d'éveil E jusqu'à la fin de l'émission du préambule initial P₂ par le noeud émetteur N_{2E}. Puis, le noeud voisin N_{2V1} émet à son tour un préambule P₂₁.

Le préambule P₂₁ émis par le noeud N_{2V1} est formé par rapport au préambule initial P₂ émis par le noeud émetteur N_{2E}. En effet, au moins l'information concernant le temps restant avant la transmission des données D₂ ou le nombre de relais à effectuer avant la transmission des données D₂ est modifiée et mise à jour par le noeud N_{2V1}.

Au cours d'une sous-étape SE₂₂, le noeud voisin N_{2V2}. éveillé pendant un instant T_{2V} alors que le préambule P₂₁ est émis par le noeud voisin N_{2V1}, détecte le préambule P₂₁. Le noeud voisin N_{2V2} reste en état d'éveil E jusqu'à la fin de l'émission du préambule P₂₁ par le noeud voisin N_{2V1}. Puis, le noeud voisin N_{2V2} émet à son tour un préambule P₂₂ modifié. Le préambule P₂₂ est formé à partir du préambule précédent P₂₁ par modification au moins de l'information concernant le temps restant avant la transmission des données D₂ ou le nombre de relais à effectuer avant la transmission des données D₂.

Au cours d'une sous-étape SE₂₃, le noeud voisin N_{2V3}, éveillé pendant un instant T_{2V} alors que le préambule P₂₂ est émis par le noeud voisin N_{2V2}, détecte le préambule P₂₂. Le noeud voisin N_{2V3} reste en état d'éveil E jusqu'à la fin de l'émission du préambule P₂₂ par le noeud voisin N_{2V2} Puis, le noeud voisin N_{2V3} émet à son tour un préambule P₂₃ modifié.

Au bout d'un temps d'attente T_{2A} au moins égal à une période d'endormissement d'un noeud, le noeud émetteur N_{2E} transmet les données D₂.

Le temps d'attente T_{2A} est défini par le noeud émetteur. Le noeud émetteur fait en sorte de transmettre les données le plus tôt possible. Néanmoins, le temps d'attente T_{2A} dépend, entre autres, de la période d'endormissement des noeuds et est au moins égal à cette période d'endormissement.

Si le noeud destinataire N_{2D} est éveillé alors que l'émission d'un préambule formé à partir du préambule initial P₂ est relayée par un noeud voisin du noeud émetteur, il peut identifier que les données D₂ lui sont destinées et à quel moment elles doivent être transmises. Le noeud destinataire N_{2D} peut alors se rendormir pour entrer à nouveau en état d'éveil E au moment prévu pour la réception des données D₂.

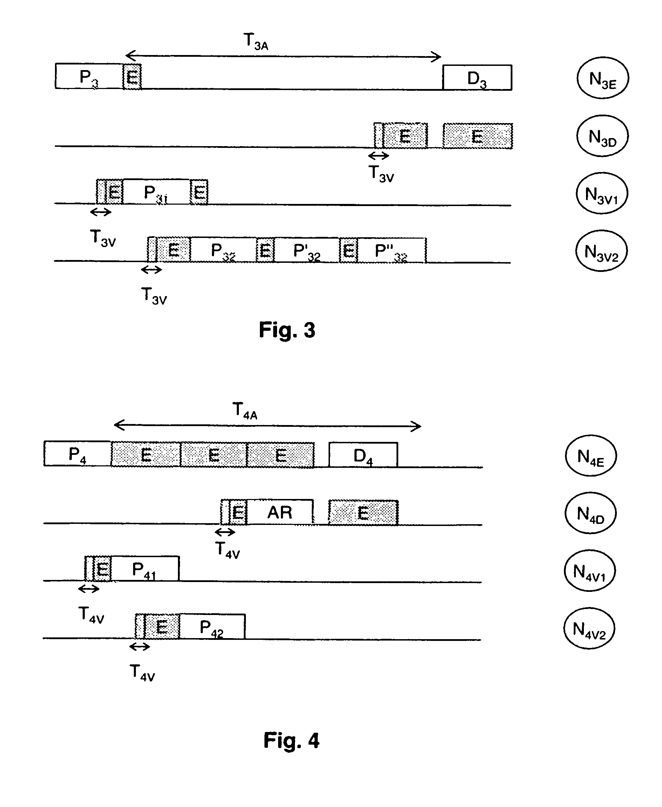

La **figure 3** représente le principe de fonctionnement d'un deuxième mode de réalisation selon l'invention d'un mode de transmission reposant sur une technique d'endormissement des noeuds avec échantillonnage de préambule.

Selon ce mode de réalisation, un noeud, qu'il s'agisse du noeud émetteur ou d'un noeud voisin, qui émet un préambule s'assure que celui-ci est entendu par un autre noeud. Cet autre noeud peut être un noeud voisin ou le noeud destinataire.

Ainsi, le noeud émetteur ainsi que les noeuds voisins qui émettent successivement un préambule restent à l'écoute tant qu'ils n'ont pas l'assurance que le préambule qu'ils ont émis a été reçu et émis par un autre noeud, c'est-à-dire tant que l'émission du préambule n'a pas été relayée par un autre noeud.

Si l'émission du préambule est relayée par un autre noeud, le noeud l'ayant émis précédemment se rendort. Tant que l'émission du préambule n'est pas relayée par un autre noeud, le noeud l'ayant émis précédemment continue à émettre le préambule.

Le nombre d'émissions du préambule par un noeud donné peut dépendre du moment où un autre noeud le reçoit ou encore des règles définies par la réglementation ou la norme de transmission considérée comme par exemple la durée d'émission d'un noeud.

L'avantage de ce mode de réalisation est de réduire la probabilité de perdre les données.

En référence à la figure 3, un noeud émetteur N_{3E} transmet des données D₃ à un noeud destinataire N_{3D}.

Comme pour le mode de réalisation de l'invention décrit précédemment, cette étape de transmission est précédée par une étape d'émission d'un préambule initial P₃ au cours de laquelle plusieurs noeuds voisins se relaient.

Après avoir émis le préambule initial P₃, le noeud émetteur N_{3E} reste en état d'éveil E et écoute si un autre noeud a reçu et émis un préambule formé à partir du préambule initial P₃.

Le noeud voisin N_{3V1}, éveillé pendant un instant T_{3V} alors que le préambule initial P₃ est émis par le noeud émetteur N_{3E}, détecte le préambule initial P₃. Le noeud voisin N_{3V}, reste en état d'éveil E jusqu'à la fin de l'émission du préambule P₃ par le noeud émetteur N_{3E}. A la fin de l'émission du préambule P₃ par le noeud émetteur N_{3E}, le noeud voisin N_{3V1} émet à son tour un préambule P₃₁ modifié.

Comme décrit pour le premier mode de réalisation de l'invention, le préambule P₃₁ émis par le noeud N_{3V1} est modifié par rapport au préambule initial P₃ émis par le noeud émetteur N_{3E} au moins en ce qui concerne l'information portant sur le temps restant avant la transmission des données D₃ ou le nombre de relais à effectuer avant la transmission des données D₃. Cette information est mise à jour par le noeud N_{3V1}.

Comme le noeud émetteur N_{3E} est en état d'éveil E et à l'écoute alors que le noeud voisin N_{3V1} émet le préambule P₃₁, le noeud émetteur N_{3E} est informé que l'émission du préambule initial P₃ a bien été relayée. Le noeud émetteur N_{3E} peut alors se rendormir.

A son tour, après avoir émis le préambule P₃₁, le noeud voisin N_{3V1} reste en état d'éveil E et écoute si un autre noeud a reçu et émis un préambule formé à partir du préambule P₃₁.

Le noeud voisin N_{3V2}, éveillé pendant un instant T_{3V} alors que le préambule P₃₁ est émis par le noeud voisin N_{3V1}, détecte le préambule P₃₁. Le noeud voisin N_{3V2} reste en état d'éveil E jusqu'à la fin de l'émission du préambule P₃₁ par le noeud voisin N_{3V1}. A la fin de l'émission du préambule P₃₁ par le noeud voisin N_{3V1}, le noeud voisin N_{3V2} émet à son tour un préambule P₃₂ formé à partir du préambule P₃₁.

Après avoir émis le préambule P₃₂, le noeud voisin N_{3V2} écoute si un autre noeud a reçu et émis un préambule formé à partir du préambule P₃₂.

Aucun noeud n'ayant relayé l'émission du préambule P₃₂, sous une forme modifiée, le noeud voisin N_{3V2} émet successivement les préambules P'₃₂ et P"₃₂, jusqu'à ce qu'un autre noeud (en l'occurrence le noeud destinataire comme représenté à la figure 3) reçoive le dernier préambule émis.

Le préambule P'₃₂ est modifié par rapport au préambule P₃₂ au moins pour ce qui concerne l'information portant sur le temps restant avant la transmission des données D₃ ou le nombre de relais à effectuer avant la transmission des données D₃. Il en est de même pour le préambule P"₃₂ relativement au préambule P'₃₂.

Au bout d'un temps T_{3A} au moins égal à une période d'endormissement d'un noeud, le noeud émetteur N_{3E} transmet les données D₃.

Le nombre de noeuds voisins se relayant pour l'émission d'un préambule formé à partir d'un préambule émis au cours d'un relais précédent ainsi que le nombre d'émissions d'un préambule par un même noeud tels que représentés à la figure 3 sont illustratifs de l'invention et ne peuvent pas être considérés comme limitatifs de celle-ci.

La **figure 4** représente le principe de fonctionnement d'un troisième mode de réalisation selon l'invention d'un mode de transmission reposant sur une technique d'endormissement des noeuds avec échantillonnage de préambule.

Pour ce mode de réalisation, le noeud émetteur assure une veille et écoute les relais successifs pendant l'émission du préambule successivement modifié jusqu'à constater que le noeud destinataire a entendu un préambule.

Comme mentionné précédemment, le préambule émis comporte un certain nombre d'informations parmi lesquelles l'adresse du noeud destinataire, l'adresse du noeud émetteur, le temps restant avant la transmission des données, etc....

Lorsque le noeud destinataire entend le préambule identifiant qu'il est destinataire de données, il peut émettre à son tour un accusé de réception comportant une information indiquant qu'il est éveillé et prêt à recevoir les données qui lui sont destinées.

En référence à la figure 4, un noeud émetteur N_{4E} transmet des données D₄ à un noeud destinataire N_{4D}.

Cette étape de transmission est précédée par une étape d'émission d'un préambule initial P₄ au cours de laquelle plusieurs noeuds voisins se relaient.

Après avoir émis le préambule initial P₄, le noeud émetteur N_{4E} reste en état d'éveil E et à l'écoute.

Le noeud voisin N_{4V1}, éveillé pendant un instant T_{4V} alors que le préambule P₄ est émis par le noeud émetteur N_{4E}, détecte le préambule initial P₄. Le noeud voisin N_{4V1} reste en état d'éveil E jusqu'à la fin de l'émission du préambule initial P₄ par le noeud émetteur N_{4E}. A la fin de l'émission du préambule initial P₄ par le noeud émetteur N_{4E}, le noeud voisin N_{4V1} émet à son tour un préambule P₄₁ modifié.

Comme pour les deux modes de réalisation de l'invention décrits précédemment, le préambule P₄₁ émis par le noeud N_{4V1} est modifié par rapport au préambule initial P₄ émis par le noeud émetteur N_{4E} au moins en ce qui concerne l'information portant sur le temps restant avant la transmission des données D₄ ou le nombre de relais à effectuer avant la transmission des données D₄. Cette information est mise à jour par le noeud N_{4V1}.

Comme le noeud émetteur N_{4E} est en état d'éveil E et à l'écoute alors que le noeud voisin N_{4V1} émet le préambule P₄₁, le noeud émetteur N_{4E} est informé que l'émission du préambule initial P₄ a bien été relayée.

Le noeud voisin N_{4V2}, éveillé pendant un instant T_{4V} alors que le préambule P₄₁ est émis par le noeud voisin N_{4V1}, détecte le préambule P₄₁. Le noeud voisin N_{4V2} reste en état d'éveil E jusqu'à la fin de l'émission du préambule P₄₁ par le noeud voisin N_{4V1}. A la fin de l'émission du préambule P₄₁ par le noeud voisin N_{4V1} le noeud voisin N_{4V2} émet à son tour un préambule P₄₂ modifié.

Comme le noeud émetteur N_{4E} est toujours en état d'éveil E et à l'écoute alors que le noeud voisin N_{4V2} émet le préambule P₄₂, le noeud émetteur N_{4E} est informé qu'un nouveau relais a été effectué.

Le noeud destinataire N_{4D}, éveillé pendant un instant T_{4V} alors que le préambule P₄₂ est émis par le noeud voisin N_{4V2}, détecte le préambule P₄₂. Il identifie par analyse du contenu du préambule P₄₂ qu'il est destinataire de données. Il émet alors à son tour un accusé de réception AR qui comporte une information précisant qu'il est éveillé et qu'il est prêt à recevoir les données qui lui sont destinées. L'accusé de réception AR peut être le dernier préambule émis après modification par le noeud destinataire N_{4D}.

Comme le noeud émetteur N_{4E} est toujours en état d'éveil E et à l'écoute, il entend l'accusé de réception AR émis par le noeud destinataire N_{4D}. Le noeud émetteur N_{4E} peut alors transmettre les données destinées au noeud destinataire N_{4D} sans attendre que le délai d'attente T_{4A} initialement prévu pour la transmission des données soit écoulé.

Ce mode de réalisation de l'invention présente l'avantage de réduire le temps d'attente T_{4A} du noeud émetteur N_{4E} pour la transmission des données D₄ à l'attention du noeud destinataire N_{4D}.

Ce mode de réalisation de l'invention présente également l'avantage de permettre au noeud émetteur N_{4E} de connaître les instants d'éveil T_{4V} pour chacun de ses noeuds voisins. Le noeud émetteur N_{4E} peut alors construire une table des instants d'éveil T_{4V} pour chacun de ses noeuds voisins à partir des informations recueillies à la suite du relais d'un préambule par chacun de ses noeuds voisins. Cela permet au noeud émetteur N_{4E} d'optimiser la transmission de prochaines données à destination d'un de ses noeuds voisins.

L'invention comporte également une gestion de conflit lors du relais d'un préambule.

Il s'agit de déterminer quel noeud voisin va relayer le préambule lorsqu'au moins deux noeuds voisins ont entendu le même préambule et sont prêts à le relayer.

Cette détermination tient compte de l'instant d'éveil de chacun des noeuds voisins concernés relativement à l'émission du préambule.

Plus l'instant d'éveil d'un noeud voisin intervient tôt pendant l'émission du préambule, plus ce noeud est prioritaire pour relayer l'émission du préambule.

La durée d'émission d'un préambule est définie au préalable pour satisfaire, entre autres, des règles définies par un mode de transmission ou d'autres contraintes.

Par conséquent, un noeud voisin est capable de mesurer le temps résiduel entre l'instant où il s'éveille et entend le préambule et l'instant correspondant à la fin de l'émission du préambule.

Pour éviter un conflit avec un autre noeud voisin, un noeud voisin qui a entendu le préambule se met en situation d'écoute entre la fin d'émission du préambule et le moment où lui-même doit émettre le préambule. Si pendant ce délai d'attente, il n'entend pas le préambule c'est qu'aucun autre noeud voisin ne l'a émis et qu'il est le noeud voisin prioritaire pour assurer le relais et émettre le préambule.

Le délai d'attente d'un noeud avant qu'il émette le préambule est inversement proportionnel au temps pendant lequel il a écouté le préambule. Ce délai d'attente est également inférieur à un seuil prédéfini pour être sûr que le préambule est effectivement émis.

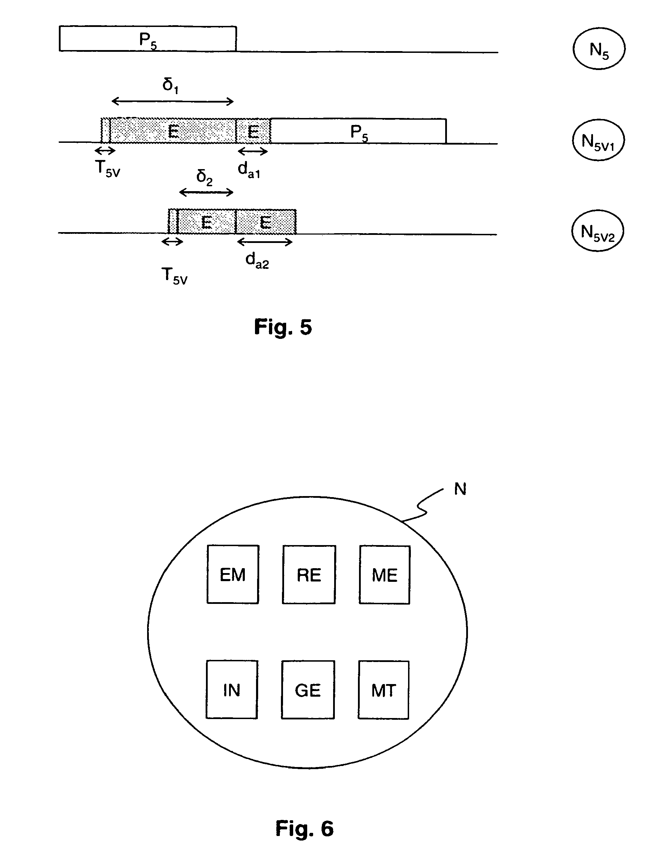

La **figure 5** représente une gestion de conflit entre deux noeuds voisins aptes à émettre un préambule.

Un noeud N₅ émet un préambule P₅.

Le noeud N₅ peut être un noeud émetteur qui émet un préambule initial P₅ ou un noeud voisin qui relaie l'émission d'un préambule.

Deux noeuds voisins N₅₁ et N_{5V2} entendent le préambule P₅ au cours de leurs instants d'éveil T_{5V}respectifs. Puis, les noeuds voisins N_{5V1} et N_{5V2} écoutent le préambule P₅ jusqu'à la fin d'émission de celui-ci pendant un temps respectivement δ₁ et δ₂.

Le noeud voisin N_{5V1} ayant écouté le plus longtemps l'émission du préambule P₅ (δ₁ étant supérieur δ₂) est le noeud prioritaire pour émettre le préambule P₅.

Le délai d'attente dₐ₁ du noeud N_{5V1} avant qu'il émette à son tour le préambule P₅ est inférieur au délai d'attente dₐ₂ du noeud N_{5V2}.

Pendant le délai d'attente dₐ₂, le noeud N_{5V2} entend que le préambule est émis. Il n'a donc pas besoin de l'émettre et peut se rendormir.

Au lieu de se rendormir, le noeud N_{5V2} peut également écouter les relais successifs et intervenir pour émettre le préambule si le relais ne se déroule pas correctement notamment si celui-ci s'interrompt.

Le nombre de noeuds considérés pour décrire la gestion de conflit est illustratif et n'est pas limitatif de l'invention.

La **figure 6** représente un schéma fonctionnel d'un noeud.

Un noeud N, qu'il s'agisse d'un noeud émetteur, d'un noeud destinataire ou d'un noeud voisin comporte un module EM d'émission. Ce module EM d'émission d'un noeud permet de générer un signal de communication. Le signal généré peut correspondre à un préambule ou à des données tels que décrits précédemment.

Un noeud N comporte également un module RE de réception d'un signal de communication similaire à celui décrit ci-dessus.

Un noeud N comporte un module ME d'écoute d'un canal de transmission sur lequel sont véhiculés des signaux de communication correspondant à un préambule ou à des données. Le module ME d'écoute peut être incorporé dans le module RE de réception.

Un noeud N comporte un module IN d'interprétation du contenu d'un préambule. Le module IN peut notamment lire les informations comprises dans un préambule.

Un noeud N comporte également un module GE de génération qui permet de générer une information à intégrer dans un préambule et de modifier le contenu d'un préambule.

En outre, un noeud N comporte des moyens MT aptes à mesurer le temps.

Un noeud N comprend également une unité de commande, non représentée, connectée à chacun des modules EM, RE, ME, IN, GE ainsi qu'aux moyens MT et adaptée pour commander leur fonctionnement.

Les différents modules et moyens décrits ci-dessus sont aptes à mettre en oeuvre les étapes du procédé décrit précédemment.

Un noeud peut ainsi effectuer grâce au module EM d'émission un relais de l'émission d'un préambule. Un relais correspond à l'émission d'un préambule formé à partir du préambule émis au cours d'un relais précédent. La formation d'un préambule est réalisée par le module GE de génération. Le préambule émis lors du premier relais est formé à partir du préambule initial et le relais est assuré jusqu'à ce que le noeud destinataire des données détecte le préambule émis.

Les modules EM, RE, ME, IN, GE et les moyens MT peuvent être des modules logiciels formant un programme d'ordinateur. L'invention concerne donc également un programme d'ordinateur comprenant des instructions logicielles pour faire exécuter par un noeud le procédé précédemment décrit.

Le module logiciel peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

L'invention peut être mise en oeuvre dans des réseaux ad hoc et plus particulièrement dans des réseaux de capteurs. Les capteurs, correspondant aux noeuds, peuvent être des sondes de température, de pression...

## Revendications

1. Procédé de transmission d'un signal de communication dans un réseau de communication comprenant une pluralité de noeuds respectant alternativement des périodes d'endormissement et des périodes d'éveil, un noeud émetteur (N_{2E}, N_{3E}, N_{4E}) faisant précéder la transmission de données à destination d'un
noeud destinataire d'une étape d'émission d'un préambule initial (P₂) **caractérisé en ce qu'**il comporte :
- au moins un relais de l'émission du préambule initial, par un noeud voisin du noeud émetteur, un relais correspondant à l'émission d'un préambule formé à partir du préambule émis au cours du relais précédent, le préambule émis lors du premier relais (P₂₁, P₃₁, P₄₁) étant formé à partir du préambule initial (P₂, P₃, P₄) et ledit au moins un relais étant assuré jusqu'à ce que le noeud destinataire des données (N₂₀, N₃₀, N₄₀) détecte le préambule émis.

2. Procédé selon la revendication 1, **caractérisé en ce qu'**un préambule émis comporte une information correspondant au temps restant avant la transmission des données ou une information correspondant au nombre de relais à effectuer avant la transmission des données.

3. Procédé selon la revendication 1 ou 2, **caractérisé en ce que** la durée d'un préambule est inférieure à un seuil prédéterminé.

4. Procédé selon l'une quelconque des revendications 1 à 3, **caractérisé en ce que** le noeud émetteur transmet les données à l'issue d'un temps d'attente qui débute à la fin de l'émission du préambule initial.

5. Procédé selon l'une quelconque des revendications 1 à 4, **caractérisé en ce que** le noeud voisin assurant le relais de l'émission d'un préambule réitère l'émission d'un préambule tant qu'un autre noeud voisin n'a pas pris le relais de l'émission d'un préambule ou tant que le noeud destinataire n'a pas détecté un préambule émis.

6. Procédé selon l'une quelconque des revendications 1 à 5, **caractérisé en ce que** le noeud émetteur assure une veille jusqu'à la détection par le noeud destinataire d'un préambule émis.

7. Procédé selon la revendication 6, **caractérisé en ce que**, après avoir détecté un préambule émis, le noeud destinataire émet un accusé de réception comportant une information indiquant qu'il est éveillé et prêt à recevoir les données qui lui sont destinées.

8. Procédé selon les revendications 4 et 7, **caractérisé en ce que**, après avoir entendu l'accusé de réception émis pas le noeud destinataire, le noeud émetteur transmet les données sans attendre la fin du temps d'attente.

9. Procédé selon l'une quelconque des revendications 1 à 8, **caractérisé en ce qu'**il comporte une gestion de conflit entre au moins deux noeuds voisins lors du relais de l'émission d'un préambule permettant de déterminer un noeud voisin prioritaire pour l'émission d'un préambule.

10. Procédé selon la revendication 9, **caractérisé en ce qu'**un noeud voisin prioritaire correspond à un noeud ayant écouté le plus longtemps le préambule émis au cours du relais précédent entre le début de la période d'éveil de ce noeud et la fin de l'émission du préambule.

11. Noeud dans un réseau de communication comprenant une pluralité
de noeuds respectant alternativement des périodes d'endormissement et des périodes d'éveil, faisant précéder lors de l'émission la transmission de données à destination d'un noeud destinataire d'une étape d'émission d'un préambule initial, **caractérisé en ce qu'**il comporte
- des moyens aptes à effectuer un relais de l'émission du préambule initial (P₂, P₃, P₄) un relais correspondant à l'émission d'un préambule formé à partir du préambule émis au cours d'un relais précédent, le préambule émis lors du premier relais (P₂₁, P₃₁, P₄₁) étant formé à partir du préambule initial et le relais étant assuré jusqu'à ce que le noeud destinataire des données (N₂₀, N₃₀, N₄₀) détecte le préambule émis.

12. Réseau de communication comprenant une pluralité de noeuds respectant alternativement des périodes d'endormissement et des périodes d'éveil, un noeud émetteur faisant précéder la transmission de données à destination d'un noeud destinataire d'une étape d'émission d'un préambule initial, **caractérisé en ce qu'**il comporte :
- au moins un noeud apte à effectuer un relais de l'émission du préambule initial (P₂, P₃, P₄) un relais correspondant à l'émission d'un préambule formé à partir du préambule émis au cours d'un relais précédent, le préambule émis lors du premier relais (P₂₁, P₃₁, P₄₁) étant formé à partir du préambule initial et le relais étant assuré jusqu'à ce que le noeud destinataire (N₂₀, N₃₀, N₄₀) des données détecte le préambule émis.

13. Programme d'ordinateur comportant des instructions pour mettre en oeuvre chacune des étapes du procédé selon l'une quelconque des revendications 1 à 10 lorsque le programme est exécuté par un ordinateur.

## Claims

1. Method of transmitting a communication signal in a communication network comprising a plurality of nodes complying alternately with sleeping periods and waking periods, a sender node (N_{2E}, N_{3E}, N_{4E}) causing the transmission of data destined for a destination node to be preceded by a step of sending an initial preamble (P₂), **characterized in that** it comprises:
- at least one relay of the sending of the initial preamble, by a neighbour node of the sender node, a relay corresponding to the sending of a preamble formed from the preamble sent in the course of the previous relay, the preamble sent during the first relay (P₂₁, P₃₁, P₄₁) being formed from the initial preamble (P₂, P₃, P₄) and said at least one relay being ensured until the destination node for the data (N_{2D}, N_{3D}, N_{4D}) detects the preamble sent.

2. Method according to Claim 1, **characterized in that** a preamble sent comprises an item of information corresponding to the time remaining before the transmission of the data or an item of information corresponding to the number of relays to be performed before the transmission of the data.

3. Method according to Claim 1 or 2, **characterized in that** the duration of a preamble is less than a predetermined threshold.

4. Method according to any one of Claims 1 to 3, **characterized in that** the sender node transmits the data on completion of a waiting time which starts at the end of the sending of the initial preamble.

5. Method according to any one of Claims 1 to 4, **characterized in that** the neighbour node ensuring the relay of the sending of a preamble repeats the sending of a preamble as long as another neighbour node has not taken over the sending of a preamble or as long as the destination node has not detected a preamble sent.

6. Method according to any one of Claims 1 to 5, **characterized in that** the sender node ensures a standby until the detection by the destination node of a preamble sent.

7. Method according to Claim 6, **characterized in that**, after having detected a preamble sent, the destination node sends an acknowledgement of receipt comprising an item of information indicating that it is awake and ready to receive the data intended for it.

8. Method according to Claims 4 and 7, **characterized in that**, after having heard the acknowledgement of receipt sent by the destination node, the sender node transmits the data without waiting for the end of the waiting time.

9. Method according to any one of Claims 1 to 8, **characterized in that** it comprises a management of conflict between at least two neighbour nodes during the relay of the sending of a preamble making it possible to determine a priority neighbour node for the sending of a preamble.

10. Method according to Claim 9, **characterized in that** a priority neighbour node corresponds to a node that has listened longest for the preamble sent in the course of the previous relay between the start of the waking period of this node and the end of the sending of the preamble.

11. Node in a communication network comprising a plurality of nodes complying alternately with sleeping periods and waking periods, causing, during sending, the transmission of data destined for a destination node to be preceded by a step of sending an initial preamble, **characterized in that** it comprises:
- means able to perform a relay of the sending of the initial preamble (P₂, P₃, P₄), a relay corresponding to the sending of a preamble formed from the preamble sent in the course of a previous relay, the preamble sent during the first relay (P₂₁, P₃₁, P₄₁) being formed from the initial preamble and the relay being ensured until the destination node for the data (N_{2D}, N_{3D}, N_{4D}) detects the preamble sent.

12. Communication network comprising a plurality of nodes complying alternately with sleeping periods and waking periods, a sender node causing the transmission of data destined for a destination node to be preceded by a step of sending an initial preamble, **characterized in that** it comprises:
- at least one node able to perform a relay of the sending of the initial preamble (P₂, P₃, P₄), a relay corresponding to the sending of a preamble formed from the preamble sent in the course of a previous relay, the preamble sent during the first relay (P₂₁, P₃₁, P₄₁) being formed from the initial preamble and the relay being ensured until the destination node for the data (N_{2D}, N_{3D}, N_{4D}) detects the preamble sent.

13. Computer program comprising instructions for implementing each of the steps of the method according to any one of Claims 1 to 10 when the program is executed by a computer.

## Patentansprüche

1. Verfahren zur Übertragung eines Kommunikationssignals in einem Kommunikationsnetz, das eine Vielzahl von Knoten enthält, die abwechselnd Schlafperioden und Wachperioden einhalten, wobei ein Sendeknoten (N_{2E}, N_{3E}, N_{4E}) der Datenübertragung an einen Zielknoten einen Schritt des Sendens einer Anfangspräambel (P₂) voranstellt, **dadurch gekennzeichnet, dass** es aufweist:
- mindestens eine Weiterleitung der Sendung der Anfangspräambel durch einen dem Sendeknoten benachbarten Knoten, wobei eine Weiterleitung der Sendung einer Präambel entspricht, die ausgehend von der Präambel geformt wird, die bei der vorhergehenden Weiterleitung gesendet wurde, wobei die bei der ersten Weiterleitung (P₂₁, P₃₁, P₄₁) gesendete Präambel ausgehend von der Anfangspräambel (P₂, P₃, P₄) geformt wird, und die mindestens eine Weiterleitung gewährleistet wird, bis der Zielknoten der Daten (N_{2D}, N_{3D}, N_{4D}) die gesendete Präambel erfasst.

2. Verfahren nach Anspruch 1, **dadurch gekennzeichnet, dass** eine gesendete Präambel eine Information entsprechend der Restzeit vor der Übertragung der Daten oder eine Information entsprechend der Anzahl von vor der Datenübertragung durchzuführenden Weiterleitungen aufweist.

3. Verfahren nach Anspruch 1 oder 2, **dadurch gekennzeichnet, dass** die Dauer einer Präambel geringer als eine vorbestimmte Schwelle ist.

4. Verfahren nach einem der Ansprüche 1 bis 3, **dadurch gekennzeichnet, dass** der Sendeknoten die Daten nach einer Wartezeit überträgt, die am Ende der Sendung der Anfangspräambel beginnt.

5. Verfahren nach einem der Ansprüche 1 bis 4, **dadurch gekennzeichnet, dass** der benachbarte Knoten, der die Weiterleitung der Sendung einer Präambel gewährleistet, die Sendung einer Präambel so lange wiederholt, wie kein anderer benachbarten Knoten die Sendung einer Präambel übernommen hat, oder so lange, wie der Zielknoten keine gesendete Präambel erfasst hat.

6. Verfahren nach einem der Ansprüche 1 bis 5, **dadurch gekennzeichnet, dass** der Sendeknoten einen Wachzustand bis zur Erfassung einer gesendeten Präambel durch den Zielknoten gewährleistet.

7. Verfahren nach Anspruch 6, **dadurch gekennzeichnet, dass** der Zielknoten nach Erfassung einer gesendeten Präambel eine Empfangsbestätigung sendet, die eine Information enthält, die anzeigt, dass er wach und bereit ist, die für ihn bestimmten Daten zu empfangen.

8. Verfahren nach den Ansprüchen 4 und 7, **dadurch gekennzeichnet, dass** der Sendeknoten, nachdem er die vom Zielknoten gesendete Empfangsbestätigung gehört hat, die Daten überträgt, ohne das Ende der Wartezeit abzuwarten.

9. Verfahren nach einem der Ansprüche 1 bis 8, **dadurch gekennzeichnet, dass** es eine Konfliktverwaltung zwischen mindestens zwei benachbarten Knoten bei der Weiterleitung der Sendung einer Präambel aufweist, die es erlaubt, einen prioritären benachbarten Knoten zum Senden einer Präambel zu bestimmen.

10. Verfahren nach Anspruch 9, **dadurch gekennzeichnet, dass** ein prioritärer benachbarter Knoten einem Knoten entspricht, der die während der vorhergehenden Weiterleitung gesendete Präambel zwischen dem Anfang der Wachperiode dieses Knotens und dem Ende der Sendung der Präambel am längsten abgehört hat.

11. Knoten in einem Kommunikationsnetz, das eine Vielzahl von Knoten enthält, die abwechselnd Schlafperioden und Wachperioden einhalten, der beim Senden der Datenübertragung an einen Zielknoten einen Schritt der Sendung einer Anfangspräambel voranstellt, **dadurch gekennzeichnet, dass** er aufweist:
- Einrichtungen, die eine Weiterleitung der Sendung der Anfangspräambel (P₂, P₃, P₄) durchführen können, wobei eine Weiterleitung der Sendung einer Präambel entspricht, die ausgehend von der während einer vorhergehenden Weiterleitung gesendeten Präambel geformt wird, wobei die bei der ersten Weiterleitung (P₂₁, P₃₁, P₄₁) gesendete Präambel ausgehend von der Anfangspräambel geformt wird, und die Weiterleitung gewährleistet wird, bis der Zielknoten der Daten (N_{2D}, N_{3D}, N_{4D}) die gesendete Präambel erfasst.

12. Kommunikationsnetz, das eine Vielzahl von Knoten enthält, die abwechselnd Schlafperioden und Wachperioden einhalten, wobei ein Sendeknoten der Datenübertragung an einen Zielknoten einen Schritt der Sendung einer Anfangspräambel voranstellt, **dadurch gekennzeichnet, dass** es aufweist:
- mindestens einen Knoten, der eine Weiterleitung der Sendung der Anfangspräambel (P₂, P₃, P₄) durchführen kann, wobei eine Weiterleitung der Sendung einer Präambel entspricht, die ausgehend von der während einer vorhergehenden Weiterleitung gesendeten Präambel geformt wird, wobei die während der ersten Weiterleitung (P₂₁, P₃₁, P₄₁) gesendete Präambel ausgehend von der Anfangspräambel geformt wird, und die Weiterleitung gewährleistet wird, bis der Zielknoten (N_{2D}, N_{3D}, N_{4D}) der Daten die gesendete Präambel erfasst.

13. Computerprogramm, das Anweisungen aufweist, um jeden der Schritte des Verfahrens nach einem der Ansprüche 1 bis 10 durchzuführen, wenn das Programm von einem Computer ausgeführt wird.
